# FASCICULE DE BREVET EUROPEEN

(11) **EP 0 942 506 B1**
(45) Date de publication et mention de la délivrance du brevet: **24.10.2001**
(21) Numéro de dépôt: 99400419.0
(22) Date de dépôt: 22.02.1999
(51) Int. Cl.: H02G 15/117, H02G 15/076, H02G 15/013, G02B 6/44

(54) **Boîtier étanche pour piquage sur câble**
Abgedichtetes Gehäuse zum Abzweigen eines Kabels
Sealed box for tapping a cable

(30) Priorité: 09.03.1998 FR 9802821
(43) Date de publication de la demande: 15.09.1999
(73) Titulaire: Nexans, 75008 Paris (FR)
(72) Inventeur: Milanowski, Michel, 60540 Anserville (FR); Lepeuve, Alain, 78590 Noisy Le Roi (FR); Vincent, Alain, 77230 Juilly (FR)
(74) Mandataire: Feray, Valérie

(56) Documents cités:
- EP-A- 0 767 522
- DE-C- 4 333 067
- US-A- 5 210 374
- US-A- 5 235 134
- US-A- 5 510 576

## Description

L'invention concerne un boîtier étanche pour piquage sur câble, ce boîtier étant prévu pour pouvoir être monté en une position quelconque, choisie en fonction des besoins le long du câble.

Les boîtiers dans lesquels sont disposés le matériel nécessaire au raccordement d'appareils dans des positions déterminées le long de câbles sont. classiquement conçus étanches, en particulier lorsqu'ils sont destinés à être montés en extérieur ou en souterrain. Il est avantageux de préserver le plus possible la continuité des conducteurs électriques et/ou optiques d'un câble sur lequel des piquages de raccordement d'appareils sont effectués. Ceci a donc conduit à la réalisation de boîtiers étanches permettant un passage du câble en traversée, via deux ouvertures réalisées sur deux parois différentes du même boîtier, ou alternativement un passage d'un câble replié en U au travers d'une ouverture unique.

Les boîtiers agencés pour un passage en traversée prévoient généralement les deux ouvertures nécessaires au passage d'un câble au niveau d'une zone de joint entre deux parties dissociables de boîtier, par exemple sous la forme d'échancrures s'ouvrant au niveau de la zone d'appui d'un couvercle sur un caisson de boîtier.

Il est alors possible d'insérer un câble transversalement dans les échancrures, en évitant d'avoir à l'enfiler par une extrémité au travers d'un orifice, ce qui devient rapidement inacceptable dès que la longueur de câble à enfiler est grande.

La mise en oeuvre d'un boîtier étanche, comportant un passage de câble s'ouvrant au niveau d'une zone de joint entre des parties de boîtier, implique une mise en place de moyens permettant d'assurer l'étanchéité dans la zone où le câble rejoint les deux parties de boîtier.

Comme il est connu il est difficile d'obtenir et de conserver une étanchéité de ce type, dite triple point, entre les éléments que constituent un câble et deux parties jointives de boîtier, en raison des nécessaires coopérations entre éléments, par exemple par alignement, et en particulier s'il y a réouverture du boîtier au cours du temps.

Le document US-A-5235134 décrit un boîtier permettant le passage d'un câble replié en U de manière que les deux parties de câble situées de part et d'autre de la pliure débouchent côte à côte d'un même côté du boîtier. Un corps tubulaire creux permet le passage du câble replié en U, il est obturé à sa base par un joint d'étanchéité comportant des trous individuels de passage pour les deux parties du câble replié et pour des câbles de dérivation. Ce joint est comprimé contre le corps tubulaire et contre les câbles par un montage de compression formé de deux parties serrées d'une part l'une contre l'autre et d'autre part toutes deux contre le corps par des vis. Le sommet du corps tubulaire reçoit un capot cylindrique monté étanche qui vient coiffer le U du câble et les dérivations établies à ce niveau. Ce boîtier prévu à section circulaire ou ovale a pour caractéristique de prévoir le passage de tous les câbles repliés ou non par des trous individuels d'un même joint circulaire ou ovale dont, pour des raisons physiques, les dimensions doivent nécessairement rester limitées. Il peut donc s'avérer inadapté en particulier lorsque le câble replié est un câble optique ayant un rayon de courbure limite relativement important. De plus, de par sa constitution, ce genre de boîtier convient mal au logement de modules d'appareillage, tels que par exemple des modules ou cassettes de piquage optique dont l'incorporation peut s'avérer avantageuse.

L'invention propose donc un boîtier étanche de piquage comportant au moins une ouverture ménagée dans une paroi pour l'insertion d'une boucle d'un câble, plié en U, dans le boîtier.

Selon une caractéristique de l'invention, le boîtier comporte une ouverture d'insertion de forme allongée périphériquement bordée par une portée pour joint et entourée à chacune de ses extrémités par une tubulure externe qui est portée par le boîtier et qui est latéralement fendue au droit de l'ouverture pour recevoir une partie du câble introduit dans l'ouverture. un joint comportant une bande d'obturation d'ouverture et deux tampons tubulaires réalisés en saillie aux extrémités de la bande et perforés chacun par un conduit pour permettre un passage étanche d'une partie de câble dans le boîtier depuis l'extérieur au travers des tubulures que les tampons bouchent, un dispositif de compression qui vient se fixer sur le boîtier et qui comporte des premiers moyens auxiliaires d'étanchéification pour plaquer la bande sur la portée pour joint et des seconds moyens auxiliaires d'étanchéification pour presser les tampons dans les tubulures sur les parties de câble qui les traversent.

L'invention, ses caractéristiques et ses avantages sont précisés dans la description qui suit en liaison avec les figures évoquées ci-dessous.

La figure 1 présente une vue éclatée et en perspective d'un boîtier selon l'invention et plus particulièrement d'un accès pour câble replié en U de ce boîtier.

La figure 2 présente une vue détaillée selon F d'une partie relative à un accès pour câble replié en U du boîtier illustré sur la figure 1.

Les figures 3 et 4 présentent une vue de face et une vue de droite d'un joint pour accès de câble replié en U selon l'invention.

Les figure 5 et 6 présentent une vue externe et une vue interne d'une demi douille de pression selon deux orientations significatives distinctes.

Les figures 7 et 8 présentent deux vues d'un presseur de joint selon deux orientations significatives distinctes.

Les figures 9 et 10 présentent deux coupes respectivement selon IX-IX et selon X-X d'une extrémité de boîtier au niveau d'un accès de câble replié en U.

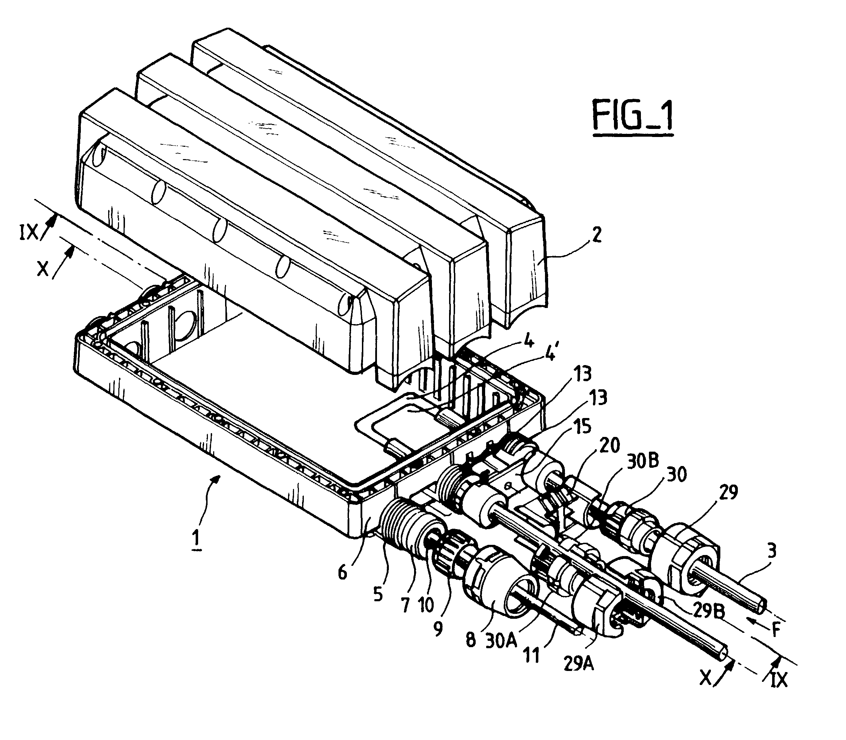

Le boîtier étanche comportant un corps 1, de type caisson, fermé par un couvercle 2 qui est illustré sur la figure 1, est par exemple réalisé en un matériau thermoplastique moulé et rigide. Il est ici supposé être un boîtier de piquage acceptant d'être monté en une position quelconque, choisie en fonction de besoins, le long d'un câble 3 et plus particulièrement d'un câble de télécommunications comportant une pluralité de fils conducteurs électriques et/ou de fibres optiques pour desservir des appareillages de communication. Le boîtier 1 est supposé comporter au moins un accès permettant l'entrée d'une boucle obtenue en repliant un câble 3 en U.

Dans le cas d'un boîtier de piquage, le câble 3 est partiellement débarrassé du gainage qui l'entoure pour dégager les fils, fibres ou tubes contenant des fibres qu'il comporte dans la portion de câble constituant la boucle de manière à permettre le raccordement de fils ou fibres de desserte d'appareillages qui ne sont pas représentés ici dans la mesure où ils ne sont pas l'objet de la présente invention. D'autres accès pour câble sont susceptibles d'être comportés par le boîtier selon l'invention, ainsi que l'illustre la figure 1 où est représenté un classique accès permettant le passage d'une partie de câble en traversée au travers d'une tubulure 5 ménagée autour d'un orifice réalisé dans une paroi 6 du boîtier. La tubulure est supposée agencée pour recevoir intérieurement un joint de câble 7, d'allure cylindrique, et extérieurement un écrou de compression 8 qui s'y visse. Cet écrou pousse le joint de câble 7, par l'intermédiaire d'une douille de compression 9, dans la tubulure et contre un câble 11 inséré dans un conduit longitudinal 10 de passage de câble que comporte ce joint 7. Le câble 11 est par exemple un câble de dérivation comportant des fils électriques ou des fibres optiques raccordés à des fils ou à des fibres du câble 3 au niveau de la portion en boucle de ce câble qui est débarrassée de son gainage et qui est prévue positionnée à l'intérieur du boîtier.

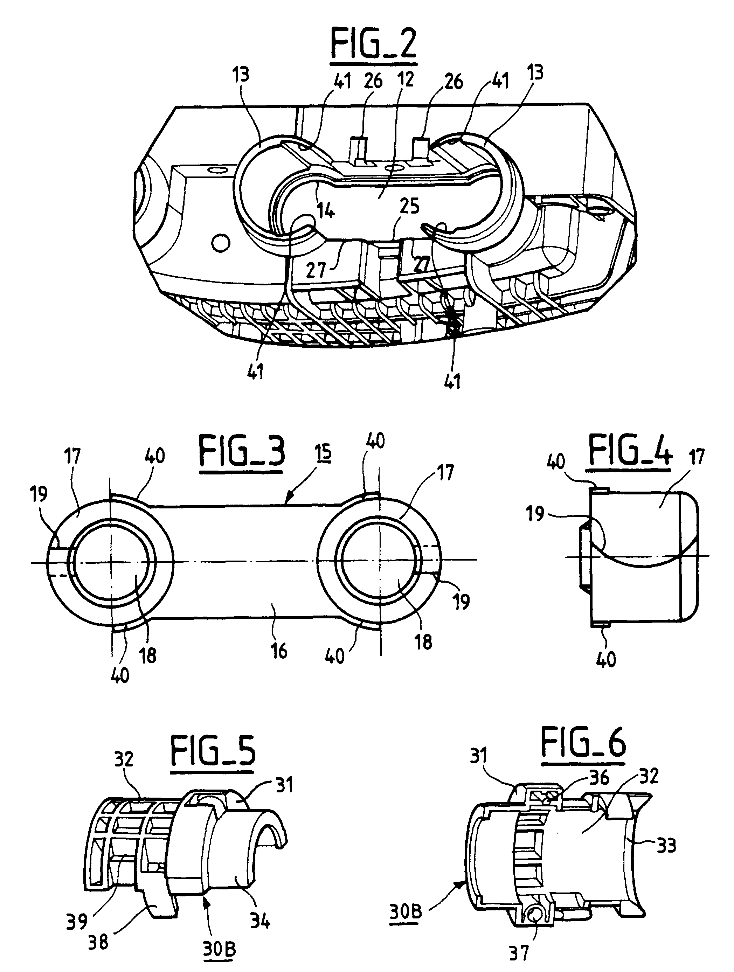

La boucle formée par repliement en U du câble 3 est destinée à être introduite dans le boîtier par une ouverture 12, unique, ici supposée ménagée dans une paroi 6 du boîtier, comme illustré sur la figure 2. L'ouverture 12 est préférablement choisie de forme allongée de manière à permettre l'insertion d'une boucle de câble 3 relativement ample, en particulier lorsque le câble comporte des fibres optiques pour lesquelles un rayon de courbure relativement grand est recommandé.

Dans l'exemple de réalisation proposé, les extrémités de l'ouverture 12 réalisée dans la paroi 6 sont entourées chacune par une tubulure 13 qui saille hors du boîtier depuis cette paroi et qui est longitudinalement fendue au droit de l'ouverture de manière à permettre un passage de câble 3. L'ouverture 12 elle-même est périphériquement bordée par une portée 14 prévue pour recevoir le bord d'un joint. Dans la réalisation illustrée sur la figure 2, cette portée est supposée s'étendre sans discontinuité autour de l'ouverture 12 qui comporte une portion centrale rectangulaire se terminant de manière circulaire à l'intérieur de chaque tubulure 13. Il est ainsi possible d'introduire une boucle de câble 3 dans le boîtier au travers de l'ouverture 12 et de positionner dans chacune des deux tubulures 13 qui bordent cette ouverture, l'une des deux parties de câble qui prolongent la boucle de part et d'autre de la pliure en U. Ces deux parties saillent alors l'une à côté de l'autre, hors des tubulures 13, lorsque la boucle se trouve à l'intérieur du boîtier.

L'étanchéité de l'accès pour câble réalisé au niveau de l'ouverture 12 est obtenue par mise en oeuvre d'un joint d'étanchéité 14, réalisé par exemple en silicone, et comportant ici une bande 16 d'obturation d'ouverture 12 et deux tampons 17 d'obturation de tubulures 13.

La bande 16 vient se plaquer sur la portée 14 qui borde l'ouverture 12, après que la boucle de câble ait été introduite dans le boîtier par cette ouverture 12, elle repose éventuellement sur une cloison plane positionnée dans le boîtier entre les parties de câble et contre la paroi où l'ouverture 12 est réalisée, cette cloison plane n'étant pas illustrée ici.

Les deux tampons 17 sont réalisés en saillie aux extrémités de la bande 16 de manière à s'insérer chacun dans une tubulure lorsque le joint 15 est en place avec sa bande en appui contre la portée qui borde l'ouverture 12.

Chaque tampon d'allure tubulaire est longitudinalement perforé par un conduit débouchant 18 de passage étanche pour une partie de câble 3. Chaque conduit 18, ici supposé central, est pourvu d'une fente latérale 19 d'insertion de câble 3 dont les bords peuvent être écartés l'un de l'autre de manière à permettre une insertion transversale d'une partie de câble 3 dans le conduit. Cette fente ici supposée située de l'autre côté du conduit par rapport à la bande 16 pour chaque tampon.

L'introduction d'une boucle de câble 3 dans le boîtier implique alors la mise en place préalable des deux parties qui se prolongent au-delà de la boucle chacune dans un des tampons 17 du joint 15, avant introduction de la boucle dans l'ouverture 12 et des tampons dans les tubulures 13, jusqu'à appui de la bande 16 contre la portée 14 bordant cette ouverture 12.

L'ouverture 12 est alors bouchée par le joint 15 dont les tampons bouchent également les tubulures, l'étanchéité du bouchage est complétée par la mise en oeuvre d'un dispositif de compression qui vient se fixer sur le boîtier.

Dans une forme de réalisation, la jonction de la bande 16 et des tampons 17 est complétée par des bordures latérales 40 qui s'étendent depuis chaque extrémité de bande au bas des tampons de part et d'autre de ces derniers et qui se terminent à un même niveau correspondant au milieu de chaque tampon. Ces bordures coopèrent avec des évidements longitudinaux 41 ménagés dans les tubulures pour positionner le joint par rapport au boîtier et plus particulièrement les tampons par rapport aux tubulures et la bande par rapport à l'ouverture 12.

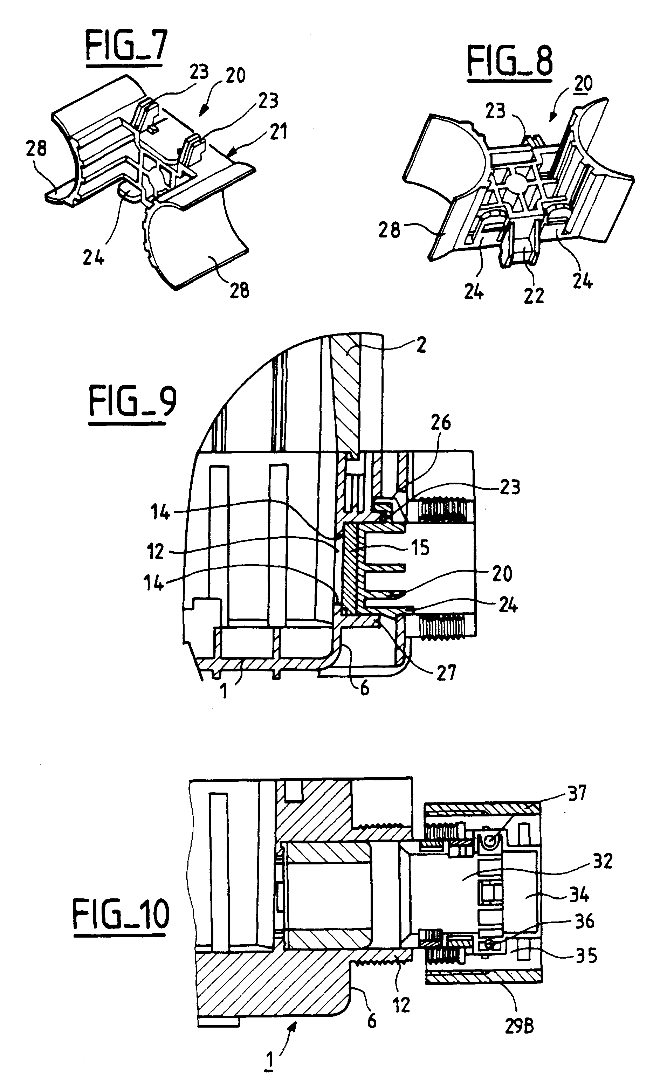

Le dispositif de compression comporte des premiers moyens auxiliaires d'étanchéification assurant le plaquage de la bande 16 sur la portée 14. Ce plaquage est obtenu par l'action d'une pièce auxiliaire rigide 20, détaillée sur les figures 7 et 8. Cette pièce auxiliaire comporte une face d'appui 21 par laquelle elle se plaque contre la bande 16 du joint entre les tampons 17 de manière à venir presser la bordure de cette bande contre la portée 14.

Dans la réalisation présentée, la pièce auxiliaire 20 s'immobilise sur le boîtier de part et d'autre de l'ouverture 12 par l'intermédiaire d'organes de positionnement et/ou d'accrochage 22, 23, 24 coopérant, notamment par encliquetage, avec des moyens complémentaires 25, 26, 27 ménagés autour de l'ouverture 12 dans la paroi 6. Elle assure alors le plaquage du joint 15 avec la pression souhaitée contre la portée de joint 14 bordant l'ouverture 12, comme montré sur la figure 9.

Le dispositif de compression comporte aussi de seconds moyens auxiliaires d'étanchéification pour presser les tampons dans les tubulures et sur les parties de câble qui les traversent.

Dans une forme préférée de réalisation, la pièce auxiliaire 20 coopère avec les seconds moyens auxiliaires et comporte des extensions latérales 28 chargées de venir obturer les fentes prévues dans les tubulures pour le passage du câble 3 et de compléter la paroi intérieure de la cavité cylindrique que délimite chacune de ces tubulures pour le tampon qu'elle reçoit. Chacune des extensions latérales 28 est ici supposée semi-circulaire et comporte une zone incurvée d'appui de joint avec une concavité orientée vers l'axe longitudinal de la tubulure le long de la fente de laquelle cette extension se positionne par coulissement lorsque la pièce auxiliaire qui la comporte est poussée vers la paroi 6 de boîtier contre laquelle cette pièce se plaque en bordure de tampon sur la bande de joint.

Les seconds moyens auxiliaires d'étanchéification comportent essentiellement deux écrous 29 venant se visser chacun sur une des tubulures 13 qui sont filetées en extrémité à cet effet, et deux douilles de compression 30. Ces dernières sont chargées de transmettre aux tampons 17 la pression occasionnée par le vissage des écrous.

Dans une forme préférée de réalisation, chaque écrou 29 est constitué par assemblage de deux parties semi-tubulaires complémentaires 29A et 29B, qui sont solidarisées par exemple par encliquetage après introduction d'un câble 3 en traversée entre elles. Chacune des douilles de compression 30 est aussi préférablement constitué de deux parties semi-tubulaires complémentaires 30A et 30B qui sont ici prévues de constitution identique et qui sont solidarisées par exemple par encliquetage après introduction du câble 3 en traversée entre elles.

Chacune des deux parties complémentaires d'une douille 30 comporte ici une demi-nervure périphérique 31 d'appui d'écrou positionnée entre une moitié d'élément presseur cylindrique 32 à embout tronconique 33 d'appui sur une extrémité de tampon 17 et une moitié de cylindre d'extrémité 34. Une butée circulaire d'appui 35 réalisée à l'intérieur de chaque écrou permet à ce dernier de venir presser contre la nervure périphérique 31 en direction du boîtier, lorsqu'il est vissé sur une tubulure - voir figure 10 -.

Dans l'exemple de réalisation présenté, un accouplement précis et permanent des parties semi-tubulaires est réalisé avec l'aide d'organes de positionnement complémentaires, tels que le pion de centrage 36 et le conduit de centrage 37 illustrés sur les figures 6 et 10, que portent complémentairement les parties semi-tubulaires. La permanence de l'accouplement est ici réalisé par coopération de pattes 38 portées par chacune des parties avec des encoches complémentaires 39 dans lesquelles les pattes viennent s'encliqueter lorsque les parties sont accouplées. Dans la réalisation présentée, les parties semi-tubulaires sont évidées et ajourées à des fins d'économie de matière, comme illustré sur la figure 5.

Comme déjà indiqué, l'ensemble constitué par un écrou 29 et une douille 30 est positionné par rapport à une tubulure 13 où l'écrou vient se visser, après que les deux parties semi-tubulaires 29A, 29B de douille et 30A, 30B d'écrou aient été accouplés autour de la partie de câble 3 passant dans la tubulure 13 et que la douille ait été introduite dans l'écrou. Préalablement l'un des tampons 17 d'un joint 15 a été monté sur cette partie de câble de manière que celle-ci vienne se loger dans le conduit 18 de ce tampon, après être passée entre les bords de la fente d'insertion 19 bordant ce conduit. La même opération est réalisée pour l'autre tampon du joint 15 sur la partie de câble située de l'autre côté de la pliure en U de ce câble 3 et le joint 15 est positionné contre la paroi 6 du boîtier en appui contre la portée 14, la boucle que forme le câble replié ayant préalablement été introduite dans l'ouverture 12. Le vissage d'un écrou sur une tubulure à l'intérieur de laquelle a été positionné un tampon 17 monté sur une partie de câble, comme indiqué ci-dessus, entraîne l'appui de la butée circulaire 35 de cet écrou contre la nervure périphérique 31 de la douille sur laquelle il est placé et la poussée de cette dernière en extrémité du tampon. Cette extrémité de tampon 17 est préférablement conformée de manière complémentaire par rapport à la butée circulaire d'appui 33 de la douille, comme illustré sur la figure 4, la butée et l'extrémité ayant par exemple des profils complémentaires, courbes et où d'allure tronconique, de concentration de pression.

Chacun des deux tampons ainsi monté est comprimé contre la paroi intérieure de la tubulure où il se trouve et contre la partie de câble qu'il loge. Dans une forme préférée de réalisation la fente d'insertion de câble 19 d'un tampon qui s'étend latéralement le long de ce tampon est une fente latérale curviligne dont les bords sont auto-centrants l'un par rapport à l'autre, de manière à centrer et à maintenir alignées naturellement à l'alignement les deux parties du joint séparées par la fente. Les deux bords d'une fente d'insertion sont ici définis par une même courbe et par exemple un même arc de cercle dont le centre est situé dans un plan transversal médian du tampon. Le joint vient alors se positionner de lui-même de manière optimale dans la tubulure, sans précaution particulière de la part du monteur chargé de sa mise en place.

## Revendications

1. Boîtier étanche de piquage comportant au moins une ouverture (12) ménagée dans une paroi (6) pour l'insertion d'une boucle d'un câble (3) plié en U dans le boîtier, **caractérisé en ce qu'**il comporte l'ouverture d'insertion (12) de forme allongée, bordée par une portée (14) pour un joint (15) et entourée à chacune de ses extrémités par une tubulure externe (13) qui est portée par le boîtier et qui est latéralement fendue au droit de l'ouverture pour recevoir une partie du câble introduit dans cette ouverture, ledit joint (15) comportant une bande (16) d'obturation de l'ouverture (12) et deux tampons tubulaires (17) réalisés en saillie aux extrémités de la bande et perforés chacun par un conduit pour permettre un passage étanche d'une des parties du câble dans le boîtier depuis l'extérieur au travers des tubulures que ces tampons bouchent, un dispositif de compression qui vient se fixer sur le boîtier et qui comporte des premiers moyens auxiliaires d'étanchéification (20) pour plaquer la bande (16) sur la portée (14) pour le joint et des seconds moyens auxiliaires d'étanchéification (29, 30) pour presser les tampons (17) dans les tubulures et sur les parties de câble qui les traversent.

2. Boîtier, selon la revendication 1, dans lequel les tampons (17) du joint comportent chacun un conduit de câble (18) pourvu d'une fente latérale (19) à bords autocentrants l'un par rapport à l'autre.

3. Boîtier, selon la revendication 2, dans lequel chaque tampon comporte une fente latérale, à bords autocentrants, curviligne.

4. Boîtier, selon l'une des revendications 1 à 3, dans lequel la jonction de la bande (16) et des tampons (17) est complétée par des bordures latérales (40) qui s'étendent depuis chaque extrémité de bande de part et d'autre des tampons et qui coopèrent avec des évidements (41) ménagés dans les tubulures pour positionner le joint par rapport au boîtier.

5. Boîtier, selon l'une des revendications 1 à 4, dans lequel les premiers moyens auxiliaires mettent en oeuvre une pièce auxiliaire (20), rigide, conformée pour s'assujettir sur le boîtier en regard de l'ouverture, en plaquant la bande de joint contre la portée pour joint.

6. Boîtier, selon la revendication 5, dans lequel la pièce auxiliaire est assujettie sur le boîtier par l'intermédiaire d'organes de positionnement et/ou d'accrochage complémentaires (22, 23, 24, 25, 26, 27).

7. Boîtier, selon l'une des revendication 1 à 6, dans lequel les seconds moyens auxiliaires comportent deux écrous (29), constitués chacun par assemblage de parties semi-tubulaires (29A, 29B) complémentaires, qui viennent respectivement se visser chacun sur une tubulure pour comprimer chacun un tampon dans une tubulure sur le câble par l'intermédiaire d'une douille de compression (30) constituée elle aussi par assemblage de parties semi-tubulaires (30A, 30B) délimitant un passage pour le câble.

8. Boîtier, selon l'une des revendications 1 à 7, dans lequel la pièce auxiliaire rigide que comporte les premiers moyens d'étanchéification est agencée pour coopérer avec les seconds moyens d'étanchéification et porte des extensions latérales (28) venant obturer par coulissement la fente de chacune des tubulures qu'elles complètent.

9. Boîtier selon la revendication 8, dans lequel les extensions latérales de la pièce auxiliaire sont semi-circulaires et comportent chacune une zone incurvée d'appui de joint venant se plaquer en bordure de tampon sur la bande de joint.

## Patentansprüche

1. Dichtes Gehäuse zur Abzweigung, mit zumindest einer Öffnung (12), die in einer Wandung (6) ausgebildet ist, zum Einführen einer Kabelschlaufe (3), die in dem Gehäuse in einem U gelegt ist, **dadurch gekennzeichnet, dass** es die Einführöffnung (12) in länglicher Form umfasst, die von einem Rand (14) für eine Verbindung (15) umgeben ist, und an jeder ihrer Enden durch einen äußeren Rohrstutzen (13) umgeben ist, der von dem Gehäuse getragen wird und der seitlich rechtwinklig zur Öffnung geschlitzt ist, um einen Teil des Kabels aufzunehmen, dass in die Öffnung eingeführt ist, wobei die Verbindung (15) ein Band (16) zur Abdeckung der Öffnung (12) umfasst, und zwei Rohrstopfen (17), die derart ausgeführt sind, dass sie über die Enden des Bandes vorstehen und jeweils durch eine Leitung perforiert sind, um einen dichten Durchgang eines Teiles des Kabels in dem Gehäuse nach außen durch die Rohrstutzen zu ermöglichen, welche durch die Stopfen verschlossen sind, eine Kompressionseinrichtung, die sich an dem Gehäuse festsetzt und die erste zusätzliche Dichteinrichtungen (20) umfasst, um das Band (16) auf den Rand (14) für die Verbindung zu drücken und zweite zusätzliche Dichteinrichtungen (29, 30), um die Stopfen (17) in die Rohrstutzen, sowie auf den Teil des Kabels zu drücken, der diese durchdringt.

2. Gehäuse nach Anspruch 1, bei dem die Stopfen (17) der Verbindung jeweils eine Kabelführung (18) umfassen, die mit einer seitlichen Öffnung (19) mit gegenüberliegenden selbstzentrierenden Rändern versehen ist.

3. Gehäuse nach Anspruch 2, bei dem jeder Stopfen eine seitliche Öffnung mit gebogenen, selbstzentrierenden Rändern hat.

4. Gehäuse nach einem der Ansprüche 1 bis 3, bei dem die Verbindung des Bandes (16) und des Stopfens (17) durch seitliche Ränder (40) komplettiert ist, die sich von einem Ende des Bandes beidseitig des Stopfens erstrecken und die mit Ausnehmungen (41) zusammenwirken, die in dem Rohrstutzen ausgebildet sind, um die Verbindung bezüglich des Gehäuses zu positionieren.

5. Gehäuse nach einem der Ansprüche 1 bis 4, bei dem die ersten Zusatzeinrichtungen ein Zusatzteil (20) einsetzen, welches derart ausgebildet ist, dass es gegenüber der Öffnung an dem Gehäuse einklemmt, und dabei das Band der Verbindung gegen den Rand für die Verbindung drückt.

6. Gehäuse nach Anspruch 5, bei dem das Zusatzteil an dem Gehäuse mittels eines komplementären Organs zur Positionierung und/oder zur Verriegelung verklemmt ist (22, 23, 24, 25, 26, 27).

7. Gehäuse nach einem der Ansprüche 1 bis 6, bei dem die zweiten Zusatzeinrichtungen zwei Schraubmuttern (29) umfassen, die jeweils durch die Montage zweier komplementärer halbröhrenförmiger Teile (29A, 29B) gebildet sind, die jeweils auf einen Rohrstutzen geschraubt werden, um den jeweiligen Stopfen in einem Rohrstutzen auf das Kabel zu drücken, über eine Kompressionshülse (30), die selbst durch Montage von halbröhrenförmigen Teilen (30A, 30B) gebildet ist, und einen Durchgang für das Kabel begrenzt.

8. Gehäuse nach einem der Ansprüche 1 bis 7, bei dem das feste Zusatzteil, das die ersten Dichteinrichtungen umfasst, ausgebildet ist, um mit den zweiten Dichteinrichtungen zusammenzuwirken und seitliche Verlängerungen (28) trägt, die die Öffnung eines jeden der Rohrstutzen durch Gleiten verdeckt, welche sie komplettieren.

9. Gehäuse nach Anspruch 8, bei dem die seitlichen Verlängerungen des Zusatzteiles halbkreisförmig sind und jeweils eine nach innen gebogene Zone umfassen, zur Anlage der Verbindung, die sich am Rand des Stopfens auf das Verbindungsband legt.

## Claims

1. A sealed tapping box provided with at least one opening (12) provided in a wall (6) for the purpose of inserting a loop of a cable (3) folded over to form a U-loop into the box, said box being **characterized in that** it has the insertion opening (12) of elongate shape, edged by a seat (14) for receiving a gasket (15) and surrounded at each of its ends by a respective external neck (13) which is carried by the box and which is laterally split facing the opening so as to receive a portion of the cable inserted through said opening, said gasket (15) comprising a strip (16) for closing off the opening (12) and two tubular stoppers (17) projecting from the ends of the strip and provided with respective through ducts to enable respective ones of the portions of the cable to pass into the box in sealed manner from the outside through the necks that are plugged by the stoppers, and a compression device which fixes to the box and which comprises first auxiliary sealing means (20) for pressing the strip (16) against the gasket seat (14), and second auxiliary sealing means (29, 30) for pressing the stoppers (17) into the necks and onto the cable portions that pass through them.

2. A box according to claim 1, in which each of the stoppers (17) of the gasket is provided with a cable duct (18) provided with a side slot (19) having edges that are self-centering relative to each other.

3. A box according to claim 2, in which each stopper is provided with a side slot that has self-centering edges and that is curved.

4. A box according to any one of claims 1 to 3, in which the joins between the strip (16) and the stoppers (17) are supplemented by side edges (40) which extend from each end of the strip on either side of each of the stoppers, and which co-operate with recesses (41) provided in the necks to position the gasket relative to the box.

5. A box according to any one of claims 1 to 4, in which the first auxiliary means implement a rigid auxiliary part (20) which is shaped to fix onto the box facing the opening, thereby pressing the gasket strip against the gasket seat.

6. A box according to claim 5, in which the auxiliary part is fixed to the box by means of complementary positioning and/or fastening members (22, 23, 24, 25, 26, 27).

7. A box according to any one of claims 1 to 6, in which the second auxiliary means comprise two nuts (29), each of which is made up of an assembly of complementary semi-tubular portions (29A, 29B) which screw onto respective ones of the necks, so that each of the nuts compresses a respective stopper in a respective neck onto the cable via a compression socket (30) also made up of an assembly of semi-tubular portions (30A, 30B) defining a passageway for the cable.

8. A box according to any one of claims 1 to 7, in which the rigid auxiliary part with which the first sealing means are provided is organized to co-operate with the second sealing means, and it carries side extensions (28) that slide to close off respective ones of the slots in the necks which are completed by the side extensions.

9. A box according to claim 8, in which the side extensions on the auxiliary part are semi-circular, and each of them has a curved gasket-abutment zone that presses at the edge of a stopper against the gasket strip.
